# EUROPEAN PATENT APPLICATION

(11) **EP 1 561 565 A1**
(43) Date of publication of application: **10.08.2005**
(21) Application number: 04028409.3
(22) Date of filing: 01.12.2004
(51) Int. Cl.: B29C 51/06

(54) **Pre-stretching device for thermoforming stations**

(30) Priority: 04.02.2004 IT MI20040168
(71) Applicant: Moretti, Bruno, 27029 Vigevano (PV) (IT)
(72) Inventor: Moretti, Bruno, 27029 Vigevano (PV) (IT)
(74) Representative: Coloberti, Luigi, Ing.

(57) **Abstract**

The pre-stretching device for a thermoforming station (10) comprises a bell shaped member (11) having upper and side walls (15,16,17), defining a bottom open space; an internal partition wall (21) divides the internal space of the bell (11) into a first and a second vacuum chambers (22,23) for pre-stretching separate balls members (M', M'') from a single plastic sheet; the vacuum chambers (22, 23) are selectively connectable to respective vacuum sources (24,25) and/or to pressurised air sources (38,39).

## Description

### BACKGROUND OF THE INVENTION

This invention relates to a pre-stretching device for a thermoforming station for moulding sheet-like plastic materials, in particular for conjointly moulding two separate pieces from a single plastic sheet, by which use is made of a pre-stretching bell-shape element connectable to a suction and/or vacuum source.

### STATE OF THE ART

The use of pre-stretching bells for thermoforming stations is known for example from US 6,450,793.

A pre-stretching bell element in general comprises peripheral or side walls and a cover, defining a single pre-stretching chamber connectable to a vacuum source; the bell element is lowered over a peripherally supported sheet of plastic material which, after being heated to a suitable plasticization temperature, is pre-stretched by vacuum or negative pressure, inside the bell.

In this way, the sheet of plastic material is pre-stretched and provided with a ball shape inside the bell, before to be closely brought into contact with a mould, thereby obtaining mouldings having superior qualitative characteristics, especially as regards uniformity in thickness of the material and shape of the moulded article.

The known pre-stretching bells usually do not allow a differentiated pre-stretching and a simultaneously moulding of separate pieces, starting from a single plastic sheet, in that a single pre-stretching ball is usually provided in the plastic sheet which, in order to be shaped with two separate moulds, requires use of complicated arrangements, such as for example a vertically movable crosspiece, with consequent problems of uneven and excessive stretching of that portion of the plastic sheet material between the two moulds.

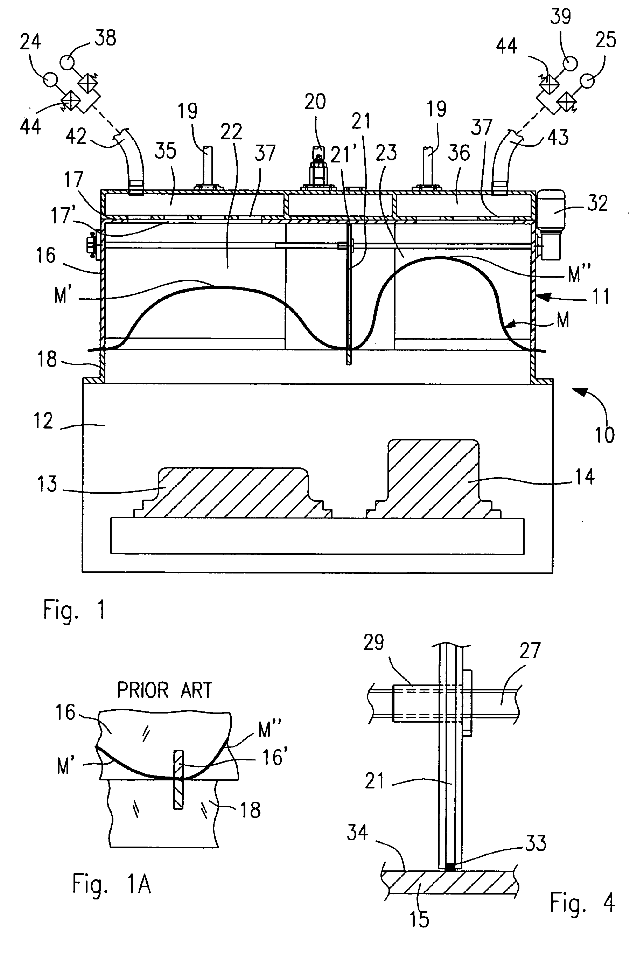

In order to partially obviate such problem, as shown in fig. 1A, it has been proposed to use a pre-stretching bell 16 comprising a fixed crossbar 16' disposed at the open bottom end of the bell 16, between two opposing side walls, in an intermediate position between two thermoforming moulds; in this case the sheet of plastic material, under the action of vacuum or negative pressure inside the bell, being clamped between the bell 16, the lower crossbar 16' and a support frame 18, is pre-stretched into two separate ball elements M', M'', suitable for being brought into contact with respective moulds.

Although this solution makes possible pre-stretching and performing two separate ball elements from a single plastic sheet, however it does not make possible to obtain controlled and differentiated pre-stretching operations of two balls, nor it makes possible to modify separate pre-stretching degree and change the characteristics of the ball members in relation to the shape and characteristics of the pieces to be moulded; it is therefore a makeshift solution which once again results in moulded articles of not always excellent quality.

### OBJECTS OF THE INVENTION

The main object of this invention is to provide a device for pre-stretching plastic materials in sheet form, for a thermoforming station, which offers the possibility of pre-stretching two separate ball members and moulding two separate pieces starting from a single plastic sheet, providing differentiated stretching degrees of the pre-stretched balls.

A further object of the invention is to provide a device comprising a pre-stretching bell, whereby it is possible to selectively control the pre-stretching and shaping of the balls in relation to the shapes and sizes of the pieces to be moulded, to obtain moulded articles having optimal characteristics and quality.

In a thermoforming plant, at each change of production, in addition to replacing the moulds, it is also necessary to replace or make modifications to the pre-stretching bell. All this entails additional costs for the replacement or maintenance of the bell, and involves prolonged down times at each change of the productive cycle.

Therefore, a still further object of this invention is to provide a differentiable pre-stretching bell device suitable for conjointly thermoforming several pieces, whereby it is possible to selectively and separately control the shape of the balls, at the same time allowing an extremely quickly and easily modification of the bell for thermoforming different pieces at each change of production.

### BRIEF DESCRIPTION OF THE INVENTION

The above can be achieved by means of a pre-stretching device according to claim 1.

More particularly, according to this invention a pre-stretching device for conjointly moulding several pieces in to a thermoforming station, from a single plastic sheet which is pre-stretched by vacuum into separate ball shaped members, the device comprising a pre-stretching bell having a bottom open space, characterised in that said bottom open space of the pre-stretching bell comprises at least a first and a second separate vacuum chambers for pre-stretching separate ball members from the single plastic sheet; and air suction or vacuum means selectively connectable to said vacuum chambers of the pre-stretching bell.

According to a further feature of the invention, a pre-stretching device for plastic sheet materials in a thermoforming station has been provided, comprising a bottom open pre-stretching bell having an upper cover and side walls, and at least one internal partition vertically extending between opposite side walls, said internal partition with the side walls of the bell, defining at least a first and a second vacuum chamber, each of said first and second vacuum chamber being separately connectable to a respective air-suction or vacuum source, through a corresponding pressure balancing chamber into said upper cover of the bell.

The internal partition can be fixedly or removably connected to the side walls of the bell, or can be adjustable in position either continuously or by step along an adjustment range, in order to change the shape and dimensions of the vacuum chambers of the bell, in relation to the characteristics of the moulds and of the pieces to be thermoformed.

According to a further embodiment of the invention, the vacuum chambers, from constructive and structural standpoint, can be provided by separate bell shaped elements which are assembled and joined at the time of their use.

### BRIEF DESCRIPTION OF THE DRAWINGS

These and further features of the invention, will be more clearly evident from the following description with reference to the accompanying drawings, in which:
- Fig. 1 shows a sectional view of a thermoforming station comprising a pre-stretching bell according to this invention;
- Fig. 2 shows a side view of the pre-stretching bell of Fig. 1, provided with means for discharging a pressurised fluid fed into the bell;
- Fig. 3 shows a bottom view of the pre-stretching bell of Fig. 1;
- Fig. 4 shows an enlarged detail of the internal partition of the bell.

### DETAILED DESCRIPTION OF THE INVENTION

The general features of this invention will be more illustrated hereunder by means of several exemplificative embodiments.

Figure 1 shows a thermoforming station 10 provided with a pre-stretching device comprising a pre-stretching bell 11 according to this invention, and a closed pneumatic case 12; first and second thermoforming mould 13, 14, are positioned into the case 12 for the simultaneously moulding of two separate pieces from a single sheet M of plastic material suitably pre-stretched into two separate ball shaped members M', M'', by vacuum.

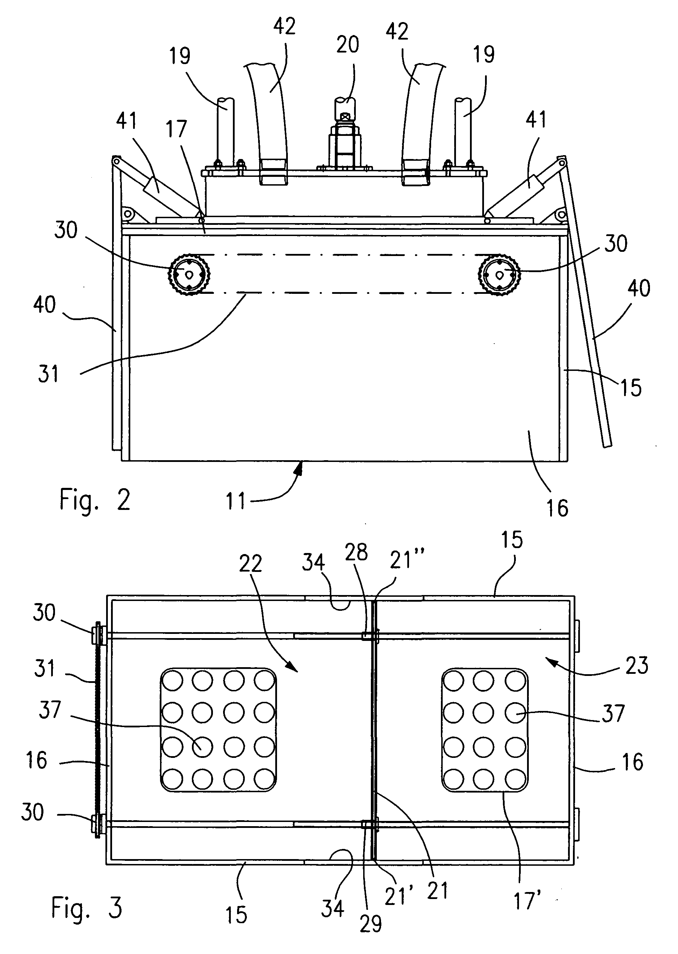

The pre-stretching bell 11 comprises peripheral side walls 15, 16, and an upper closing wall 17 to define a bottom open space; The bell 11, as shown in Fig. 3, has a rectangular shaped cross section extending on a longitudinal axis, in which reference number 15 indicates the long sides walls while reference number 16 indicates to the short side walls.

The pre-stretching bell 11 is movable between a raised position and a lowered position against a support frame 18 for the plastic sheet material M, above the pneumatic case 12, in such a way that a sheet material M positioned above the frame 18 is tightly changed in position by the bell 11; in addition and in order to improve the clamping of the plastic sheet M, use may be made of a pressure member, not shown, connected to the same bell.

The raising and lowering movements of the pre-stretching bell 11 may be for example achieved by supporting the bell 11 by means of guide bars 19, and by connecting the bell 11 to a lifting cylinder 20, of the hydraulic or pneumatic type.

The bottom open space defined by the pre-stretching bell 11 is divided into at least two separate vacuum chambers 22, 23 for separate pre-stretching of ball shaped members M', M''; each vacuum chamber 22, 23 is selectively and separately connectable to a respective air-suction and/or vacuum 24, 25 sources.

According to a preferential embodiment of the invention, the pre-stretching bell 11 comprises an internal partition wall 21 vertically extending between two opposite side walls 15, in particular the walls 15 corresponding to the long sides of the bell 11.

As shown in figure 1, the internal partition wall 21 together with the side walls 15, 16 defines a first and a second vacuum chamber 22, 23 for vacuum supporting the plastic sheet M to form two separate pre-stretched ball members M', M'', said vacuum chambers 22, 23, being separately connectable to respective vacuum sources 24, 25.

However, in order to ensure greater versatility in use, the partition wall 21 can be removably secured inside the bell 11, in such a way as to mould large plastic pieces having dimensions corresponding to the entire bell 11.

According to a first embodiment, the internal partition wall 21 can be fixedly fastened inside the bell; with this solution however it is not possible to change the dimensions of the vacuum chambers 22, 23 to conform them to different balls M', M''.

Preferably, the partition wall 21 is made adjustable in position along the longitudinal axis of the bell 11; in this way it is possible to mould pieces M', M'', having different shape and dimensions, by correctly positioning the partition wall 21 each time inside the bell 11.

This can be achieved for example by making the partition wall 21 selectively and tightly connectable to the opposite side walls 15 of the bell 11 in different positions, by screws or other suitable fastening means; this solution, as shown in the accompanying figures, can preferentially be obtained by providing drive means for allowing the partition wall 21 to tightly slide along the opposite side walls 15.

In this latter case, as shown in figures 1 and 3, the partition wall 21 is connected to control means for continuous sliding; the control means preferably comprise first and second drive screws 26, 27, rotatably supported by the side walls 16 of the short sides of the bell 11.

The drive screws 26, 27 engage with respective nut screws 28, 29, secured in appropriate through holes in the partition wall 21; the drive screws 26, 27 are also operatively connected to each other, for example by pinions 30 and chain 31, as well as to actuation means, such as for example an electric geared motor 32.

The partition wall 21 is provided with sealing gaskets 33 disposed along the upper edge 21' and along the side edges 21" to seal against the upper wall 17 and the side walls 15 of the bell 11.

In order to ensure a more efficient seal, the upper wall 17 and the side peripheral walls 15 preferentially have ground internal surfaces 34.

To be able to mould pieces with dimensions corresponding to the entire bell 11, the partition wall 21 may also be positioned or made to slide against one of the walls 16.

As shown in figure 1, preferably the first and the second vacuum chambers 22, 23 for stretching the ball members M', M'', are operatively connectable to vacuum sources by respective pressure balancing chambers 35, 36 for pressure compensation, into a box shaped cover which extend above the upper closing wall 17; in particular, the vacuum chambers 22, 23 are connected with the pressure balancing chambers 35, 36 through holes 17' provided in the upper closing wall 17, which open out in correspondence with apertures 37 for the air-flow e in a lower wall of the chambers 35, 36.

Preferably, the apertures 37 for the air flow are adjustable in relation to the suction and stretching requirements of the plastic sheet M in the two vacuum chambers 22, 23, so as to be able to more precisely control the pre-stretching of the balls M', M''.

The vacuum chambers 22, 23 can also be selectively connectable to respective sources 38, 39 of a pressurised fluid, so as to carry out a forced cooling of the moulded pieces by feeding air streams into the lowered condition of the bell 11.

In order to allow the generation of a cooling air stream, the bell 11 must also comprise means for discharging the pressurised air; the air discharging means can for example comprise one or more movable shutters or ports on the sides of the bell 11, operatively connected to selectively operable control means.

In particular, the bell 11 of fig. 2 is provided with closing ports 40 which are tiltably supported around corresponding rotational axes, in turn connected to respective control cylinders 41.

As an alternative, the air discharging means can comprise valve members not shown.

The vacuum sources 24, 25 and the sources of pressurised air 38, 39 can be connected to each vacuum chamber 22, 23 by means of corresponding connecting ducts 42, 43 which open out into the respective air chambers 35, 36.

In particular, as shown in Fig. 1, the vacuum sources 24, 25 and the pressurised air sources 38, 39 are connected to the respective ducts 42, 43 by means of solenoid control valves 44, or by means of three-way valves, not shown.

According to an alternative embodiment, the pre-stretching bell according to this invention can comprise first and second bell elements, structurally independent and separable from each other, each having peripheral walls and an upper closing wall, defining the vacuum chambers 22, 23.

As shown in Fig. 1, a pre-stretching bell 11 according to this invention, offers the possibility of moulding two separate pieces from a single plastic sheet, obtaining differentiated stretching degrees of the balls M', M''.

In particular, the bell 11 according to this invention enables the pre-stretching of the balls M', M'' to be selectively controlled, in relation to the specific requirements in shape and size of each piece to be moulded, in such a way as to obtain moulded pieces having high structural and strength qualities, deriving from the fact that the plastic sheet M stretches evenly, adapting in the best way possible to each mould 13, 14.

Moreover, a bell 11 according to this invention can be quickly and easily adapted for moulding different pieces at each change of production.

What has been described and shown with reference to the accompanying drawings, has been given purely by way of example in order to illustrate the general features of the invention, and of several of its preferential embodiments; therefore other modifications and variations to the pre-stretching bell, without thereby departing from the scope of the claims.

## Claims

1. A pre-stretching device for conjointly moulding several pieces into a thermoforming station (10), from a single plastic sheet (M) which is pre-stretched by vacuum into separate ball shaped members (M', M'') the device comprising:
a pre-stretching bell (11) having a bottom open space,
**characterised in that** said bottom open space of the bell comprises at least a first and a second separate vacuum chambers (22, 23) for pre-stretching separate ball members (M', M'') from the single plastic sheet (M); and air suction or vacuum means (24, 25) selectively connectable to said vacuum chambers (22, 23) of the pre-stretching bell (11).

2. The pre-stretching device according to claim 1,
**characterised** said bell (11) comprises at least one internal partition wall (21) vertically extending between two opposite side walls (15), said partition wall (21) together with side walls (15,16) of the bell (11), defining said at least first and second vacuum chambers (22,23) of the bell (11).

3. The pre-stretching device according to claim 1,
**characterised in that** said first and second vacuum chambers (22,23) are selectively connectable to respective pressurised air sources (38,39).

4. The pre-stretching device according to claim 1,
**characterised in that** said first and second vacuum chambers (22,23) are operatively connected to the vacuum sources (24,25) by respective pressure balancing chambers (35,36).

5. The pre-stretching device according to claim 4,
**characterised in that** the pressure balancing chambers (35,36) are connected to said first and second vacuum chambers (22,23) by air-flow apertures (37) in an upper wall (17) of the bell (11).

6. The pre-stretching device according to claim 2,
**characterised in that** the internal partition wall (21) is fixedly fastened to opposite side walls (15) of the bell (11).

7. The pre-stretching device according to claim 2,
**characterised in that** the internal partition wall (21) is removably fixed to the side walls (15) of the bell (11).

8. The pre-stretching bell according to claim 2, in which the bell extends on a longitudinal axis, **characterised in that** said partition wall (21) is adjustably movable along opposite side walls parallely extending to the longitudinal axis of the bell (11).

9. The pre-stretching device according to claim 8,
**characterised in that** the partition wall (21) can be selectively fastened in different positions to the side walls (15) of the bell (11).

10. The pre-stretching device according to claim 8,
**characterised in that** the partition wall (21) is slidably and air tightly movable, along said opposite side walls (15) of the bell (11).

11. The pre-stretching device according to claim 10,
**characterised in that** control means (26,27,28,29,32) are provided for moving said partition wall (21).

12. The pre-stretching according to claim 11, **characterised in that** said control means comprise first and second operative screws means (26,27), rotatably supported by side walls (16) of the bell (11), said screws means (26,27) engaging with respective nut screws (28,29) on the partition wall (21), and
**in that** the screws means (26,27) are operatively connected to actuation means (32).

13. The pre-stretching device according to claim 10,
**characterised in that** an upper closing wall (17) and said side walls (15) of the bell (11) have grounded internal surfaces (34).

14. The pre-stretching device according to claim 10,
**characterised in that** the partition wall (21) is provided with gaskets (33) sealingly extending along an upper edge (21') and along side edges (21") sliding against the upper closing wall (17) and the side walls (15) of the bell (11).

15. The pre-stretching device according to claim 3,
**characterised by** comprising means for discharging the pressurised air fed into the bell (11).

16. The pre-stretching device according to claim 15,
**characterised in that** said air discharging means comprise at least one movable port (40), operatively connected to control means (41).

17. The pre-stretching device according to claim 15,
**characterised in that** said air discharging means comprise valve-operated devices.

18. The pre-stretching device according to claim 1,
**characterised in that** said pre-stretching bell (11) comprises a first and a second independent bell elements, each bell element having peripheral walls and an upper closing wall defining independent vacuum chambers (22, 23) for pre-stretching a single plastic sheet (M).
